# EUROPEAN PATENT SPECIFICATION

(11) **EP 2 686 530 B1**
(45) Date of publication and mention of the grant of the patent: **22.05.2019**
(21) Application number: 12713200.9
(22) Date of filing: 12.03.2012
(51) Int. Cl.: F01N 3/20, F01N 3/36

(54) **METHOD FOR OPERATING AN ENGINE, EXHAUST SYSTEM AND OXIDATION CATALYST**
VERFAHREN ZUM BETRIEB EINES MOTORS, ABGASANLAGE UND OXIDATIONSKATALYSATOR
PROCÉDÉ POUR FAIRE FONCTIONNER UN MOTEUR, SYSTÈME D'ÉCHAPPEMENT ET CATALYSEUR D'OXYDATION

(30) Priority: 14.03.2011 FI 20115252
(43) Date of publication of application: 22.01.2014
(73) Proprietor: Wärtsilä Finland Oy, 65100 Vaasa (FI)
(72) Inventor: HELLÉN, Göran, FI-65280 Vaasa (FI); JÄRVI, Arto, FI-65320 Vaasa (FI); LINDE, Eirik, FI-65410 Vaasa (FI); RAIKIO, Tero, FI-65230 Vaasa (FI); WIDJESKOG, Klaus, FI-65730 Jungsund (FI)
(74) Representative: Berggren Oy, Helsinki & Oulu
(86) International application number: PCT/FI2012/050233
(87) International publication number: WO 2012/123636

(56) References cited:
- EP-A2- 1 421 987
- WO-A1-02/32552
- WO-A1-2006/029808
- US-A1- 2006 010 857

## Description

### Technical field of the invention

The present invention relates to a method for operating an internal combustion engine according to the preamble of claim 1. The invention also concerns an exhaust system for an internal combustion engine and an oxidation catalyst for an internal combustion engine, as defined in the preambles of other independent claims.

### Background of the invention

Hydrocarbon emissions from lean burn gas engines are typically relatively high compared to those of other types of engines. The emitted hydrocarbons consist mainly of unburned fuel, which is in case of natural gas primarily methane. Since methane is a strong greenhouse gas, there is a need to reduce methane emissions.

Methane emissions can be reduced to some extent by re-optimizing the lean burn combustion process, but typically at the expense of increased fuel consumption and NOx and CO emissions. Methane emissions can also be reduced by an oxidation catalyst. However, an oxidation catalyst works only when the exhaust gas temperature is high enough, i.e. approximately 500 °C. The exhaust gas temperature after the engine is typically too low, often around 400 °C, for oxidation of methane. Before the turbine of the turbocharger, however, the temperature level is higher enabling oxidation of methane in an oxidation catalyst.

An oxidation catalyst deactivates during use and must be regenerated from time to time. Especially sulfur causes fast deactivation of the catalyst material. Regeneration of the oxidation catalyst is done by introducing fuel into the exhaust duct of the engine upstream from the oxidation catalyst. When the fuel burns, it raises the exhaust temperature enabling regeneration of the oxidation catalyst. Typically temperature of approximately 650-750 °C is needed for the regeneration. A problem is that the maximum temperature and speed the turbine of the turbocharger can stand are limited due to mechanical constraints. The maximum temperature for the turbine is typically 620-650 °C. The speed limit depends on the size and type of the turbocharger. When the oxidation catalyst is arranged upstream from the turbine of the turbocharger, there is a risk that the turbocharger is damaged during regeneration of the oxidation catalyst.

US 2006/0010857 A1 discloses an exhaust treatment system comprising two lean NOx traps, an SCR reactor and a diesel oxidation catalyst. A reductant can be injected into one of the lean NOx traps at a time for regenerating only one of the lean NOx traps. Before entering the diesel oxidation catalyst, the reductant stream is mixed with the exhaust gas of the engine.

WO 2006/029808 A1 discloses an exhaust system for a motor vehicle with a diesel engine. The exhaust system comprises an oxidation catalyst and a particle filter unit that are arranged downstream from a turbocharger. Vaporized fuel can be introduced into the exhaust system for regenerating the particle filter unit.

EP 1421987 A2 discloses a method and system for regenerating NOx adsorbers and particulate filters. Fuel is introduced into an exhaust system upstream from an oxidation catalyst. The system can comprise two oxidation catalysts for redundancy and exhaust gas flow can be directed by means of a valve to one of the oxidation catalysts.

### Summary of the invention

The object of the present invention is to provide an improved method for operating an internal combustion engine. The characterizing features of the method according to the present invention are given in the characterizing part of claim 1. Other objects of the present invention are to provide an improved exhaust system for an internal combustion engine and an oxidation catalyst for an internal combustion engine.

According to the present invention, in the method for operating an internal combustion engine, gaseous fuel is introduced into an oxidation catalyst sequentially in different locations for regenerating part of the oxidation catalyst at a time.

An exhaust system according to the present invention comprises a turbocharger and an oxidation catalyst, the oxidation catalyst comprising means for introducing gaseous fuel into the oxidation catalyst in at least two locations for enabling partial regeneration of the oxidation catalyst.

An oxidation catalyst according to the present invention comprises a casing, at least one catalyst element that is arranged inside the casing, and means for introducing gaseous fuel into the oxidation catalyst in at least two locations for enabling partial regeneration of the oxidation catalyst.

When the fuel is introduced sequentially in different locations inside the oxidation catalyst, the exhaust temperature downstream from the oxidation catalyst during the regeneration can be kept lower. This reduces the risk that the turbocharger damages due to too high exhaust temperature or rotation speed of the turbocharger.

According to an embodiment of the present invention, in the method for operating an internal combustion engine, the fuel is introduced into compartments that are located upstream from a catalyst element of the oxidation catalyst. The compartments direct the fuel flow more accurately to a certain part of the oxidation catalyst and enable better temperature control.

According to another embodiment of the invention, exhaust gases from the engine are mixed by means of a mixing device after the catalyst element of the oxidation catalyst. A mixing device that is arranged downstream from the catalyst element ensures that the exhaust gas part flows are mixed before entering the turbine of the turbocharger and temperature gradients are minimized.

According to another embodiment of the invention, water is introduced into the exhaust duct between the oxidation catalyst and the turbine of the turbocharger for reducing exhaust gas temperature before the turbocharger. With water injection into the exhaust duct, exhaust temperature can be further decreased.

According to another embodiment of the invention, exhaust gas temperature between the oxidation catalyst and the turbine of the turbocharger is monitored, and the water injection is performed when a predetermined exhaust gas temperature is exceeded. According to another embodiment of the invention, the rotation speed of the turbocharger is monitored, and the water injection is performed when a predetermined rotation speed is exceeded. By monitoring the exhaust temperature and the rotation speed of the turbocharger, the water injection can be limited to situations where there is a real risk of excessive temperature and/or rotation speed.

According to another embodiment of the invention, methane concentration or the total concentration of hydrocarbons downstream from the oxidation catalyst is monitored, and the oxidation catalyst is regenerated when the concentration exceeds a predetermined limit. With the hydrocarbon concentration monitoring the degree of deactivation of the oxidation catalyst can be determined accurately.

According to another embodiment of the invention, temperature difference over the oxidation catalyst is monitored, and the oxidation catalyst is regenerated when the temperature difference drops below a predetermined value. This is an alternative way to determine deactivation of the oxidation catalyst.

According to an embodiment of the invention, the oxidation catalyst comprises at least one partition wall that is arranged upstream from the catalyst element for dividing the oxidation catalyst into at least two compartments, and each compartment comprises means for introducing gaseous fuel.

According to another embodiment of the invention, the oxidation catalyst comprises a plurality of catalyst elements, and one compartment is arranged upstream from each of the catalyst elements. According to another embodiment of the invention, the partition wall extends between the catalyst elements. If separate catalyst elements are arranged in each compartment, the fuel flows can be directed accurately to each catalyst element. Effective regeneration and minimum temperature increase can thus be achieved.

According to another embodiment of the invention, a mixing device is arranged downstream from the oxidation catalyst for mixing exhaust gases from the engine. According to another embodiment of the invention, the exhaust system comprises means for introducing water into the exhaust duct downstream from the oxidation catalyst.

According to another embodiment of the invention, the exhaust system comprises means for measuring exhaust gas temperature between the oxidation catalyst and the turbine of the turbocharger.

According to another embodiment of the invention, the exhaust system comprises means for measuring the rotation speed of the turbocharger.

According to another embodiment of the invention, the exhaust system comprises means for measuring methane concentration or the total concentration of hydrocarbons downstream from the oxidation catalyst.

According to another embodiment of the invention, the exhaust system comprises means for measuring temperature difference over the oxidation catalyst.

### Brief description of the drawings

Fig. 1 shows schematically a turbocharged internal combustion engine with an oxidation catalyst.
Fig. 2 shows an oxidation catalyst.
Fig. 3 shows a cross-sectional view of the oxidation catalyst of Fig. 2.
Fig. 4 shows part of another oxidation catalyst.
Fig. 5 shows a cross-sectional view of the oxidation catalyst of Fig. 4.

### Detailed description of the invention

Embodiments of the invention are now described in more detail with reference to the accompanying drawings.

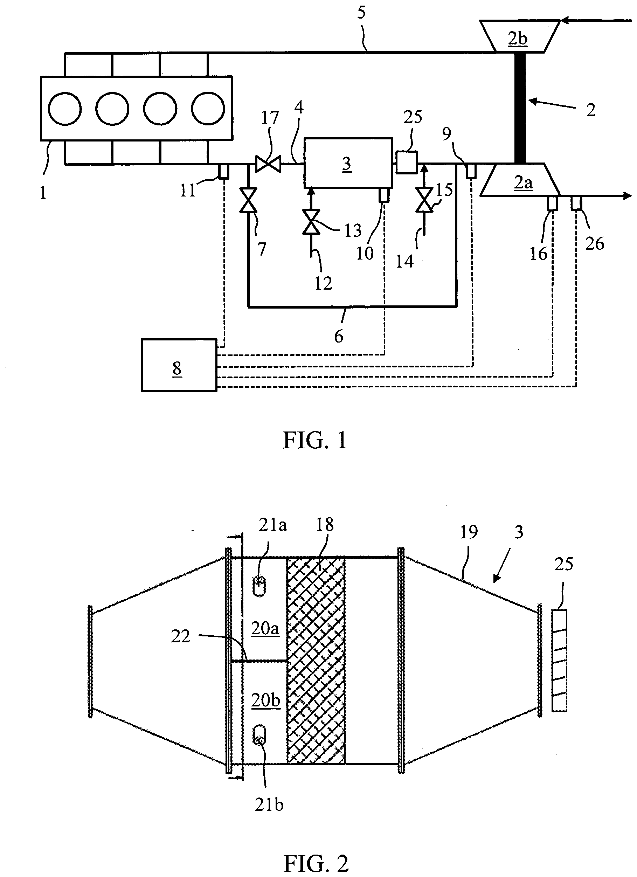

In figure 1 is shown an internal combustion engine 1 that can be operated on gaseous fuel. In the embodiment described here, the engine 1 is a dual-fuel engine, which can also be operated on liquid fuel. However, the engine 1 could also be a gas engine that is operated only on gaseous fuel. Liquid pilot fuel can be used in the engine 1 for igniting the gaseous fuel. The intake air of the engine 1 is pressurized by a turbocharger 2. The turbocharger 2 comprises a turbine 2a that is connected to the exhaust duct 4 of the engine 1 and a compressor 2b that is connected to the intake duct 5. An oxidation catalyst 3 is arranged between the engine 1 and the turbine 2a of the turbocharger 2 for reducing carbon monoxide (CO) and hydrocarbon (HC) emissions, especially methane emissions of the engine 1. In the oxidation catalyst 3 noble metals, such as platinum or palladium, act as catalyst allowing oxidation of CO and HC by residual oxygen of the exhaust gases. The catalyst material is arranged on a support structure to form at least one catalyst element 18, as shown in figure 2. The catalyst element is arranged inside a casing 19.

The engine 1 is provided with a fuel duct 12 for introducing gas into the oxidation catalyst 3 upstream from the catalyst element 18. The fuel duct 12 comprises a fuel valve 13 for controlling the admission of the gas. The fuel valve 13 is a regulating valve that allows adjustment of the fuel flow. By introducing fuel through the fuel duct 12 into the oxidation catalyst 3, temperature of the exhaust gases can be increased for regenerating the oxidation catalyst 3. Fuel can also be introduced into the oxidation catalyst 3 when the oxidation catalyst 3 is cold and/or when the catalyst is partly deactivated. This ensures proper functioning of the oxidation catalyst 3.

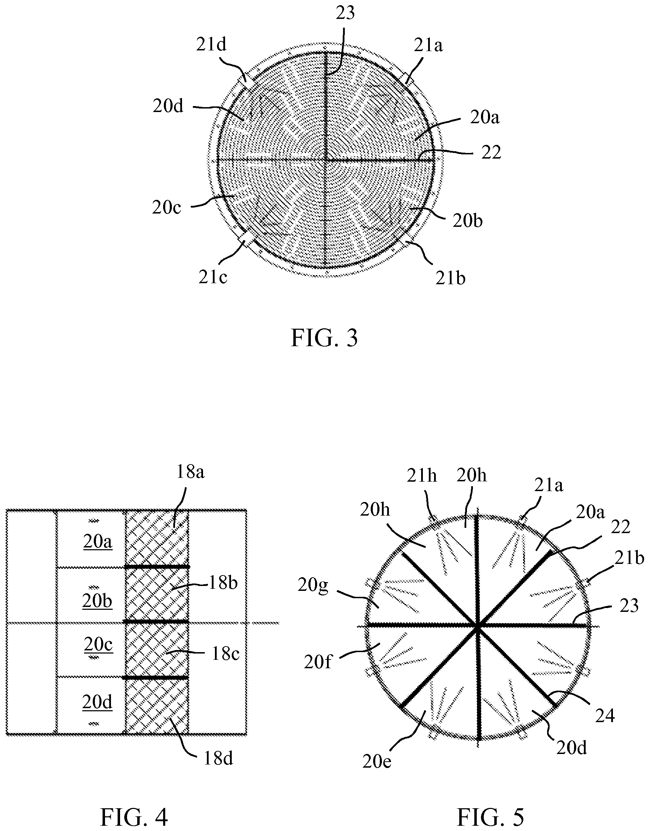

The oxidation catalyst 3 of figures 2 and 3 is provided with partition walls 22, 23. The walls 22, 23 divide the space inside the oxidation catalyst 3 upstream from the catalyst element 18 into four compartments 20a-20d. Each of the compartments 20a-20d is provided with a fuel injection nozzle 21a-21d. It is also possible that the oxidation catalyst 3 is not divided into compartments 20a-20d, but is only provided with nozzles 21a-21d that are arranged in different locations inside the oxidation catalyst 3 and directed towards different parts of the catalyst element 18. The fuel injection nozzles 21a-21d are connected to the fuel duct 12. Each fuel injection nozzle 21a-21d can be controlled independently. Each compartment 20a-20d can also be provided with a plurality of nozzles. A static mixer 25 is arranged downstream from the oxidation catalyst 3. Alternatively, the static mixer 25 could be arranged inside the oxidation catalyst 25 downstream from the catalyst element 18.

In figures 4 and 5 is shown an oxidation catalyst 3 according to another embodiment of the invention. In this embodiment, the space inside the oxidation catalyst 3 is divided by partition walls 22, 23, 24 into eight compartments 20a-20h. The oxidation catalyst 3 comprises eight separate catalyst elements 18a-18h, and one of the catalyst elements 18a-18h is arranged in each compartment 20a-20h. Each of the compartments 20a-20h is provided with a fuel injection nozzle 21a-21h. The fuel injection nozzles 21a-21h are connected to the fuel duct 12. Each fuel injection nozzle 21a-21h can be controlled independently.

Turning back to figure 1, a water duct 14 is arranged to supply water into the exhaust duct 4 between the oxidation catalyst 3 and the turbine 2a of the turbocharger 2. The water duct 14 is provided with a water valve 15 for controlling the admission of water. The water valve 15 is a regulating valve that allows adjustment of the water flow. The engine 1 also comprises a by-pass duct 6, through which the exhaust gases can be guided past the oxidation catalyst 3. The inlet of the by-pass duct 6 is connected to the exhaust duct 4 between the engine 1 and the oxidation catalyst 3. The outlet of the by-pass duct 6 is connected to the exhaust duct 4 between the oxidation catalyst 3 and the turbine 2a of the turbocharger 2. The by-pass duct 6 is provided with a by-pass valve 7 for controlling the exhaust gas flow through the duct 6. The exhaust duct 4 is provided with an isolation valve 17 that is arranged between the inlet of the by-pass duct 6 and the oxidation catalyst 3.

The engine 1 is provided with temperature sensors for measuring exhaust gas temperature at different locations. A first temperature sensor 9 is located in the exhaust duct 4 upstream from the turbine 2a of the turbocharger 2 and downstream from the water duct 14. A second temperature sensor 10 is arranged to measure the temperature in the oxidation catalyst 3. Alternatively, the second sensor 10 could also be arranged to measure the temperature immediately after the oxidation catalyst 3, i.e. between the oxidation catalyst 3 and the water duct 14. A third temperature sensor 11 is located in the exhaust duct 4 between the engine 1 and the oxidation catalyst 3. The engine 1 is also provided with a gas sensor 26 that measures hydrocarbon concentration in the exhaust gas. The gas sensor 26 is located downstream from the oxidation catalyst 3. The temperature data from the sensors 9, 10, 11 and the gas concentration data from the gas sensor 26 is received in a control unit 8.

When the engine 1 is operated on gaseous fuel, the exhaust gases from the engine 1 normally flow through the oxidation catalyst 3, where unburned hydrocarbons and CO are oxidized by the residual oxygen in the exhaust gases.

The condition of the oxidation catalyst 3 is monitored for detecting deactivation of the oxidation catalyst 3. Monitoring can be done by measuring the concentration of methane or the total concentration of hydrocarbons downstream from the oxidation catalyst 3. In the embodiment of figure 1, hydrocarbon concentration is monitored by a gas sensor 26 that is arranged downstream from the turbocharger 2. When the hydrocarbon concentration in the exhaust gases exceeds a predetermined limit, it is an indication that the oxidation catalyst 3 needs regeneration. The limit value for the allowed hydrocarbon concentration can depend on the engine load and speed and other operating conditions. Instead of the gas sensor 26, the need for regeneration can be determined by monitoring temperature difference over the oxidation catalyst 3. When the difference between the temperatures measured by the first temperature sensor 9 downstream from the oxidation catalyst 3 and the third temperature sensor 11 between the engine 1 and the oxidation catalyst 3 is high, it is an indication of proper functioning of the oxidation catalyst 3. When the temperature difference over the oxidation catalyst 3 is low, it is an indication of deactivation of the oxidation catalyst 3. When the temperature difference drops below a predetermined limit value, the need for regeneration can be detected. The limit value can depend on the engine load and speed and other operating conditions.

When it is detected that the oxidation catalyst 3 is deactivated, fuel is introduced into the oxidation catalyst 3 for increasing temperature inside the oxidation catalyst 3. Temperature of 650-750 °C is needed for regenerating the oxidation catalyst 3. Fuel is injected sequentially through the nozzles 21a-21h into the compartments 20a-20h. In the embodiment of figures 2 and 3, only part of the catalyst element 18 is thus regenerated at a time. In the embodiment of figures 4 and 5, only one of the separate catalyst elements 18a-18h is regenerated at a time. Fuel can also be injected into two or more compartments 20a-20h at the same time, if the exhaust temperature allows. Sequential fuel injection enables exhaust temperature that is high enough to regenerate the oxidation catalyst 3, but helps to keep the exhaust temperature after the oxidation catalyst 3 lower and prevents thus damaging of the turbocharger 2. If a static mixer 25 is arranged downstream from the oxidation catalyst 3, effective mixing of the exhaust gas part flows that are at different temperatures is ensured. The required number of the compartments 20a-20h depends on the temperature and rotation speed limits of the turbocharger 2. With a higher number of the compartments 20a-20h, the exhaust gas temperature and the rotation speed of the turbocharger 2 can be kept lower. If the turbocharger 2 can stand high temperatures and rotation speeds, two compartments might suffice.

For instance when the oxidation catalyst 3 is cold and/or the catalyst is slightly deactivated, the normal exhaust gas temperature inside the oxidation catalyst 3 might be too low for oxidation. Also in this case, fuel can be introduced into the oxidation catalyst 3. The second temperature sensor 10 is used for controlling the temperature inside the oxidation catalyst 3. If the temperature is below a certain limit value, gaseous fuel is introduced into the oxidation catalyst 3 through the fuel duct 12 for increasing the temperature inside the oxidation catalyst 3. The injected fuel helps to start up ("ignite") methane combustion process in the oxidation catalyst 3. Fuel injection might also be needed to keep the temperature high enough for the methane combustion process, especially when the catalyst is partly deactivated. Temperature of approximately 500 °C is needed for the oxidation of methane.

To ensure that the exhaust gas temperature before the turbocharger 2 does not exceed the maximum temperature that is allowed for the turbocharger 2, the exhaust gas temperature before the turbocharger 2 is continuously monitored by the first temperature sensor 9. Also the rotation speed of the turbocharger 2 is monitored by a rotation speed sensor 16 to ensure that the allowed maximum speed is not exceeded. If the exhaust gas temperature and/or the rotation speed exceed predetermined first limit values, water injection into the exhaust duct 4 upstream from the turbine 2a of the turbocharger 2 is started. The limit value for the exhaust temperature is typically set at 620-650 °C. The limit value for the rotation speed depends on the type and size of the turbocharger 2. Alternatively, or in addition, water injection can be started every time when the oxidation catalyst 3 is regenerated. Water injection is continued until the exhaust gas temperature and the rotation speed of the turbocharger 2 drop below second limit values that are set below the first limit values.

When the engine 1 is operated on liquid fuel, the exhaust gases are guided into the by-pass duct 6 by opening the by-pass valve 7 and closing the isolation valve 17. Since the oxidation catalyst 3 is very sensitive to sulfur, even exhaust gases of low-sulfur fuel would deactivate the oxidation catalyst 3 quickly. By using the by-pass duct 6 for passing the oxidation catalyst 3, the need for the regeneration of the catalyst 3 can be reduced.

It will be appreciated by a person skilled in the art that the invention is not limited to the embodiments described above, but may vary within the scope of the appended claims. For instance, the engine might comprise two turbochargers connected in series. In that case, the oxidation catalyst can be arranged between the engine and the first turbocharger in the direction of the exhaust gas flow.

## Claims

1. A method for operating a turbocharged internal combustion engine (1), in which method gaseous fuel is introduced into an oxidation catalyst (3) that is arranged between the engine (1) and a turbine (2a) of a turbocharger (2) for regenerating the oxidation catalyst (3), **characterized in that** the fuel is introduced into the oxidation catalyst (3) sequentially in different locations for increasing the temperature of the exhaust gas for regenerating part of the oxidation catalyst (3) at a time.

2. A method according to claim 1, **characterized in that** the fuel is introduced into compartments (20a-20h) that are located upstream from a catalyst element (18, 18a-18h) of the oxidation catalyst (3).

3. A method according to claim 1 or 2, **characterized in that** exhaust gases from the engine (1) are mixed by means of a mixing device (25) after the catalyst element (18, 18a-18h) of the oxidation catalyst (3).

4. A method according to any of claims 1-3, **characterized in that** water is introduced into the exhaust duct (4) between the oxidation catalyst (3) and the turbine (2a) of the turbocharger (2) for reducing exhaust gas temperature before the turbocharger (2).

5. A method according to claim 4, **characterized in that** exhaust gas temperature between the oxidation catalyst (3) and the turbine (2a) of the turbocharger (2) is monitored, and the water injection is performed when a predetermined exhaust gas temperature is exceeded.

6. A method according to claim 4 or 5, **characterized in that** the rotation speed of the turbocharger (2) is monitored, and the water injection is performed when a predetermined rotation speed is exceeded.

7. A method according to any of the preceding claims, **characterized in that** methane concentration or the total concentration of hydrocarbons downstream from the oxidation catalyst (3) is monitored, and the oxidation catalyst (3) is regenerated when the concentration exceeds a predetermined limit.

8. A method according to any of claims 1-6, **characterized in that** temperature difference over the oxidation catalyst (3) is monitored, and the oxidation catalyst (3) is regenerated when the temperature difference drops below a predetermined value.

9. An exhaust system for an internal combustion engine (1), the exhaust system comprising a turbocharger (2) and an oxidation catalyst (3) that is arranged between the engine (1) and a turbine (2a) of a turbocharger (2), the oxidation catalyst (3) comprising at least one catalyst element (18, 18a-18h), **characterized in that** the exhaust system further comprises means (21a-21h) for introducing gaseous fuel into the oxidation catalyst (3) in at least two locations for increasing the temperature of the exhaust gas for enabling that only part of the oxidation catalyst (3) is regenerated at a time.

10. An exhaust system according to claim 9, **characterized in that** the oxidation catalyst (3) comprises at least one partition wall (22, 23, 24) that is arranged upstream from the catalyst element (18) for dividing the oxidation catalyst (3) into at least two compartments (20a-20g), and each compartment (20a-20g) comprises means (21a-21h) for introducing gaseous fuel.

11. An exhaust system according to claim 9 or 10, **characterized in that** the oxidation catalyst (3) comprises a plurality of catalyst elements (18a-18h), and one compartment (20a-20h) is arranged upstream from each of the catalyst elements (18a-18h).

12. An exhaust system according to claim 11, **characterized in that** the partition wall (22, 23, 24) extends between the catalyst elements (18a-18h).

13. An exhaust system according to any of claims 9-12, **characterized in that** a mixing device (25) is arranged downstream from the oxidation catalyst (3) for mixing exhaust gases from the engine (1).

14. An exhaust system according to any of claims 9-13, **characterized in that** the exhaust system comprises means (14, 15) for introducing water into the exhaust duct (4) downstream from the oxidation catalyst (3).

15. An exhaust system according to any of claims 9-14, **characterized in that** the exhaust system comprises means (9) for measuring exhaust gas temperature between the oxidation catalyst (3) and the turbine (2a) of the turbocharger (2), means (16) for measuring the rotation speed of the turbocharger (2), means (26) for measuring methane concentration or the total concentration of hydrocarbons downstream from the oxidation catalyst (3), and/or means (9, 11) for measuring temperature difference over the oxidation catalyst (3).

## Patentansprüche

1. Verfahren zum Betreiben eines turboaufgeladenen Verbrennungsmotors (1), wobei in dem Verfahren gasförmiger Brennstoff in einen Oxidationskatalysator (3) eingeführt wird, der zum Regenerieren des Oxidationskatalysators (3) zwischen dem Motor (1) und einer Turbine (2a) eines Turboladers (2) angeordnet ist, **dadurch gekennzeichnet, dass** der Kraftstoff sequenziell an unterschiedlichen Orten zum Erhöhen der Temperatur des Abgases und Regenerieren eines Teils des Oxidationskatalysators (3) zu einer Zeit in den Oxidationskatalysator (3) eingeführt wird.

2. Verfahren nach Anspruch 1, **dadurch gekennzeichnet, dass** der Kraftstoff in Kammern (20a-20h) eingeführt wird, die sich vor einem Katalysatorelement (18, 18a-18h) des Oxidationskatalysators (3) befinden.

3. Verfahren nach Anspruch 1 oder 2, **dadurch gekennzeichnet, dass** Abgase von dem Motor (1) mittels einer Mischvorrichtung (25) nach dem Katalysatorelement (18, 18a-18h) des Oxidationskatalysators (3) gemischt werden.

4. Verfahren nach einem der Ansprüche 1 bis 3, **dadurch gekennzeichnet, dass** zum Reduzieren der Abgastemperatur vor dem Turbolader (2) Wasser in den Abgaskanal (4) zwischen dem Oxidationskatalysator (3) und der Turbine (2a) des Turboladers (2) eingeführt wird.

5. Verfahren nach Anspruch 4, **dadurch gekennzeichnet, dass** die Abgastemperatur zwischen dem Oxidationskatalysator (3) und der Turbine (2a) des Turboladers (2) überwacht wird und die Wassereinspritzung ausgeführt wird, wenn eine vorbestimmte Abgastemperatur überschritten ist.

6. Verfahren nach Anspruch 4 oder 5, **dadurch gekennzeichnet, dass** die Drehzahl des Turboladers (2) überwacht und die Wassereinspritzung ausgeführt wird, wenn eine vorbestimmte Drehzahl überschritten wird.

7. Verfahren nach einem der vorstehenden Ansprüche, **dadurch gekennzeichnet, dass** die Methankonzentration oder die Gesamtkonzentration von Kohlenwasserstoffen nach dem Oxidationskatalysator (3) überwacht wird und der Oxidationskatalysator (3) regeneriert wird, wenn die Konzentration einen vorbestimmten Grenzwert überschreitet.

8. Verfahren nach einem der Ansprüche 1 bis 6, **dadurch gekennzeichnet, dass** die Temperaturdifferenz über dem Oxidationskatalysator (3) überwacht und der Oxidationskatalysator (3) regeneriert wird, wenn die Temperaturdifferenz unter einen vorbestimmten Wert fällt.

9. Abgassystem für einen Verbrennungsmotor (1), wobei das Abgassystem einen Turbolader (2) und einen Oxidationskatalysator (3), der zwischen dem Motor (1) und einer Turbine (2a) eines Turboladers (2) angeordnet ist, umfasst, wobei der Oxidationskatalysator (3) mindestens ein Katalysatorelement (18, 18a-18h) umfasst, **dadurch gekennzeichnet, dass** das Abgassystem ferner Mittel (21a-21h) zum Einführen des gasförmigen Brennstoffs in den Oxidationskatalysator (3) an mindestens zwei Orten zum Erhöhen der Temperatur des Abgases und Ermöglichen, dass nur ein Teil des Oxidationskatalysators (3) zu einer Zeit regeneriert wird, umfasst.

10. Abgassystem nach Anspruch 9, **dadurch gekennzeichnet, dass** der Oxidationskatalysator (3) mindestens eine Trennwand (22, 23, 24), die vor dem Katalysatorelement (18) angeordnet ist, zum Teilen des Oxidationskatalysators (3) in mindestens zwei Kammern (20a-20g) umfasst und dass jede Kammer (20a-20g) Mittel (21a-21h) zum Einführen des gasförmigen Brennstoffs umfasst.

11. Abgassystem nach Anspruch 9 oder 10, **dadurch gekennzeichnet, dass** der Oxidationskatalysator (3) mehrere (18a-18h) Katalysatorelemente umfasst und eine Kammer (20a-20h) vor jedem der Katalysatorelemente (18a-18h) angeordnet ist.

12. Abgassystem nach Anspruch 11, **dadurch gekennzeichnet, dass** sich die Trennwand (22, 23, 24) zwischen den Katalysatorelementen (18a-18h) erstreckt.

13. Abgassystem nach einem der Ansprüche 9 bis 12, **dadurch gekennzeichnet, dass** eine Mischvorrichtung (25) nach dem Oxidationskatalysator (3) zum Mischen von Abgasen von dem Motor (1) angeordnet ist.

14. Abgassystem nach einem der Ansprüche 9 bis 13, **dadurch gekennzeichnet, dass** das Abgassystem Mittel (14, 15) zum Einführen von Wasser in den Abgaskanal (4) nach dem Oxidationskatalysator (3) umfasst.

15. Abgassystem nach einem der Ansprüche 9 bis 14, **dadurch gekennzeichnet, dass** das Abgassystem Mittel (9) zum Messen der Abgastemperatur zwischen dem Oxidationskatalysator (3) und der Turbine (2a) des Turboladers (2), Mittel (16) zum Messen der Drehzahl des Turboladers (2), Mittel (26) zum Messen der Methankonzentration oder der Gesamtkonzentration von Kohlenwasserstoffen nach dem Oxidationskatalysator (3) und/oder Mittel (9, 11) zum Messen der Temperaturdifferenz über dem Oxidationskatalysator (3) umfasst.

## Revendications

1. Procédé pour faire fonctionner un moteur à combustion interne turbochargé (1), dans lequel procédé du carburant gazeux est introduit dans un catalyseur à oxydation (3) qui est disposé entre le moteur (1) et une turbine (2a) d'un turbochargeur (2) pour régénérer le catalyseur à oxydation (3), **caractérisé en ce que** le carburant est introduite dans le catalyseur à oxydation (3) séquentiellement à différents endroits pour augmenter la température des gaz d'échappement pour régénérer une partie du catalyseur à oxydation (3) à la fois.

2. Procédé selon la revendication 1, **caractérisé en ce que** le carburant est introduit dans des compartiments (20a-20h) qui sont situés en amont d'un élément de catalyse (18,18a-18h) du catalyseur à oxydation (3).

3. Procédé selon la revendication 1 ou 2, **caractérisé en ce que** les gaz d'échappement du moteur (1) sont mélangés au moyen d'un dispositif mélangeur (25) en aval de l'élément de catalyse (18,18a-18h) du catalyseur à oxydation (3).

4. Procédé selon l'une quelconque des revendications 1 à 3, **caractérisé en ce que** de l'eau est introduite dans la conduite d'échappement (4) entre le catalyseur à oxydation (3) et la turbine (2a) du turbochargeur (2) pour réduire la température du gaz d'échappement en amont du turbochargeur (2).

5. Procédé selon la revendication 4, **caractérisé en ce que** la température de gaz d'échappement entre le catalyseur à oxydation (3) et la turbine (2a) du turbochargeur (2) est contrôlée, et que l'injection d'eau est réalisée lorsqu'une température prédéterminée du gaz d'échappement est dépassée.

6. Procédé selon la revendication 4 ou 5, **caractérisé en ce que** la vitesse de rotation du turbochargeur (2) est contrôlée, et que l'injection d'eau est réalisée lorsqu'une vitesse de rotation prédéterminée est dépassée.

7. Procédé selon l'une quelconque des revendications précédentes, **caractérisé en ce que** la concentration en méthane ou la concentration totale en hydrocarbures en aval du catalyseur à oxydation (3) est contrôlée, et que le catalyseur à oxydation (3) est régénéré lorsque la concentration excède une limite prédéterminée.

8. Procédé selon l'une quelconque des revendications 1 à 6, **caractérisé en ce que** la différence de température au-dessus du catalyseur à oxydation (3) est contrôlée, et que le catalyseur à oxydation (3) est régénéré lorsque la différence de température chute en dessous d'une valeur prédéterminée.

9. Système d'échappement pour moteur à combustion interne (1), ce système d'échappement comprenant un turbochargeur (2) et un catalyseur à oxydation (3) qui est disposé entre le moteur (1) et une turbine (2a) d'un turbochargeur (2), le catalyseur à oxydation (3) comprenant au moins un élément de catalyse (18,18a-18h), **caractérisé en ce que** le système d'échappement comprend en outre un moyen (21a-21h) pour introduire du carburant gazeux dans le catalyseur à oxydation (3) à au moins deux endroits pour augmenter la température du gaz d'échappement afin de permettre que seule une partie du catalyseur à oxydation (3) soit régénérée à la fois.

10. Système d'échappement selon la revendication 9, **caractérisé en ce que** le catalyseur à oxydation (3) comprend au moins une cloison de séparation (22, 23, 24) qui est disposée en amont de l'élément de catalyse (18,18a-18h) pour diviser le catalyseur à oxydation (3) en au moins deux compartiments (20a-20g), chaque compartiment (20a-20g) comprenant un moyen (21a-21h) d'introduction de carburant gazeux.

11. Système d'échappement selon la revendication 9 ou 10, **caractérisé en ce que** le catalyseur à oxydation (3) comprend une pluralité d'éléments de catalyse (18a-18h), et qu'un compartiment (20a-20h) est disposé en amont de chacun des éléments de catalyse (18a-18h).

12. Système d'échappement selon la revendication 11, **caractérisé en ce que** la cloison de séparation (22, 23, 24) s'étend entre les éléments de catalyse (18a-18h) .

13. Système d'échappement selon l'une quelconque des revendications 9 à 12, **caractérisé en ce qu'**un dispositif mélangeur (25) est disposé en aval du catalyseur à oxydation (3) pour mélanger les gaz d'échappement du moteur (1).

14. Système d'échappement selon l'une quelconque des revendications 9 à 13, **caractérisé en ce que** le système d'échappement comprend un moyen (14,15) d'introduction d'eau dans la conduite d'échappement (4) en aval du catalyseur à oxydation (3).

15. Système d'échappement selon l'une quelconque des revendications 9 à 14, **caractérisé en ce que** le système d'échappement comprend un moyen (9) pour mesurer la température du gaz d'échappement entre le catalyseur à oxydation (3) et la turbine (2a) du turbochargeur (2), un moyen (16) pour mesurer la vitesse de rotation du turbochargeur (2), un moyen (26) pour mesurer la concentration en méthane ou la concentration totale en hydrocarbures en aval du catalyseur à oxydation (3), et/ou un moyen (9,11) pour mesurer la différence de température au-dessus du catalyseur à oxydation (3).
